# DEMANDE DE BREVET EUROPEEN

(11) **EP 1 067 475 A1**
(43) Date de publication de la demande: **10.01.2001**
(21) Numéro de dépôt: 99113556.7
(22) Date de dépôt: 06.07.1999
(51) Int. Cl.: G06K 19/06, G06K 7/10

(54) **Système d'identification d'objets**

(71) Demandeur: European Community, 2920 Luxembourg (LU)
(72) Inventeur: Cause d'Agraives, Bertrand, 21014 Laveno (IT); Tebaldi, Piercarlo, 21020 Brebbia (IT); Chiaramello, Michel, 21014 Laveno (IT); Mascetti, Ermanno, 21010 Germignaga (IT)
(74) Mandataire: Weinmiller, Jürgen, Dipl.-Ing.

(57) **Abrégé**

La présente invention concerne un système d'identification d'un objet comportant un support de numéro d'identification lié à l'objet ou en faisant partie, et une tête de lecture de ce numéro. Elle s'applique, par exemple, à l'identification d'éléments combustibles nucléaires avant et après l'irradiation.

Selon l'invention le support (1) présente au moins une surface plane (6) dans laquelle sont percées plusieurs marques (12) alignés régulièrement le long d'au moins une ligne, chaque marque ayant une parmi plusieurs profondeurs discrètes en fonction du numéro d'identification de cet objet, et que la tête de lecture (3) comporte des moyens (13) pour se situer face à cette surface plane (6), des moyens (9) pour balayer cette surface (6) et des moyens (8) pour mesurer la profondeur de ces marques (12).

## Description

La présente invention concerne un système d'identification d'un objet comportant un support d'un numéro d'identification lié à l'objet ou en faisant partie et une tête de lecture de ce numéro.

Le besoin d'identifier les objets est bien satisfait couramment par des codes à barres associés à des marchandises et lus par un détecteur optique. Mais dans certain cas, ce code n'est pas utilisable à cause du risque d'un endommagement ou à cause de l'environnement de la surface qui porte ce code. Dans certaines domaines des erreurs de lecture ne peuvent pas être tolérées. C'est le cas par exemple dans le domaine nucléaire pour l'identification des éléments combustibles après leur déchargement d'un réacteur, ces éléments étant alors dans une piscine en eau profonde.

On connaît en outre des systèmes mettant en oeuvre une plaque avec des trous multiples à des emplacements définis, chaque trou (ou emplacement sans trou) constituant un bit d'un numéro d'identification. S'il faut pouvoir distinguer entre 2ⁿ objets, il faut prévoir au moins n emplacements sur la plaque, ce qui, en cas d'un grand nombre d'objets à distinguer, exige un arrangement de ces emplacements sur une plaque de grandes dimensions et en matrice (lignes et colonnes). Par conséquent, la tête de lecture (à lumière optique, à rayons ultrasonores ou du type laser) doit pouvoir balayer successivement et précisément tous ces emplacements, ou alors il faudrait une matrice complexe comportant une pluralité de têtes.

L'invention a pour but de proposer un système tel qu'énoncé ci-dessus qui assure une identification d'un objet parmi un grand nombre, sur un support de dimensions limitées et qui permette une lecture rapide et sans erreur au moyen d'une tête de lecture simple, même dans des conditions sévères, telles que sous l'eau.

Ce but est atteint par le système tel que défini dans la revendication 1 ci-jointe. En ce qui concerne des exemples préférés de mise en oeuvre de ce système, référence est faite aux revendications secondaires.

L'invention sera décrite ci-après plus en détail à l'aide de quelques exemples de réalisation et des dessins annexés.

La figure 1 montre en coupe axiale un système selon l'invention.

Les figures 2a et 2b montrent, en coupe, un support présentant des trous qui sont disposés sur un cercle et qui codent dans leur ensemble l'identité de l'objet auquel ce support est lié.

Les figures 3a et 3b montrent deux variantes d'un tel support comportant des trous de codage alignés en ligne droite.

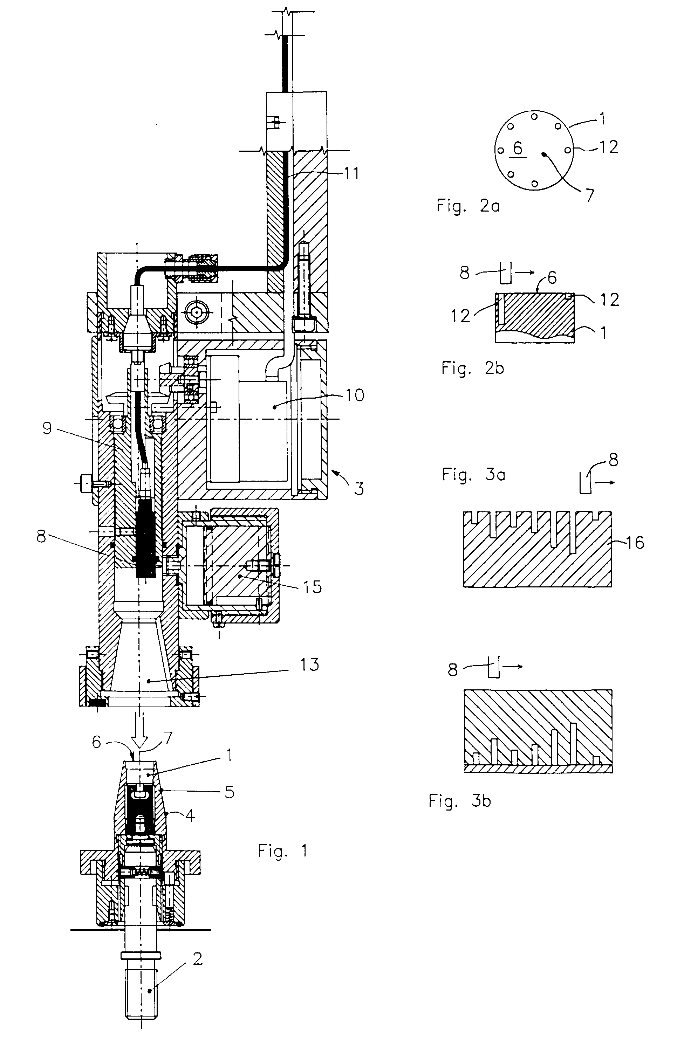

Le système représenté sur la figure 1 se compose d'un support codé 1 lié à l'objet 2 qu'on désire identifier, et d'une tête de lecture 3 permettant la lecture du support codé. L'objet peut être, par exemple, un élément combustible nucléaire disposé dans une piscine à 6m sous l'eau. Son extrémité supérieure porte un embout 4 se terminant par un cône 5 qui enferme ledit support 1 de telle façon que sa surface plane supérieure 6, perpendiculaire à l'axe 7 de l'élément 2, puisse être accouplée à la tête 3 en vue de la lecture de son identité.

La tête de lecture est munie de moyens ultrasonores, à savoir d'un transducteur ultrasonore 8, qui envoie en opération des impulsions ultrasonores vers le support et qui analyse les réflexions. Ces moyens sont montés excentriquement dans une capsule 9 qui peut être entraînée en rotation par un moteur 10 lors de la lecture. Un câble électrique 11 relie la tête 3 à une unité de commande et de calcul (non visible) comportant un microprocesseur et des mémoires.

La tête comporte en bas une ouverture 13 d'une forme complémentaire à celle du cône 5 situé à l'extrémité supérieure de l'élément combustible 2. En rapprochant la tête 3 de l'élément combustible le cône glisse dans cette ouverture et le transducteur 8 se place devant la surface plane 6 du support.

Ce support est représenté, à plus grande échelle, sur la figure 2a par une vue de dessus, et sur la figure 2b par une vue en coupe. Il consiste en un cylindre droit dont l'axe coïncide avec celui de l'élément combustible 2 et dont la surface plane supérieure est munie de sept trous 12 parallèlement à cet axe. Les axes des trous sont situés sur un cylindre fictif coaxial audit support 1.

Le codage de l'identité du support, et donc aussi de l'élément combustible auquel il est lié, repose sur la profondeur des différents trous 12. A titre d'exemple on dispose pour chaque trou de sept profondeurs différentes entre 2,0mm et 11mm avec un pas de 1,5mm. Le diamètre des trous est de 1,5mm. Leur distance angulaire mutuelle est de 45°, ce qui laisse un secteur de 90° sans trou (voir la figure 2a) pour définir l'index ou début de la série de trous. Dans cet exemple, on peut distinguer entre 7⁷ ≈ 8·10⁵ supports différents. Il serait aussi possible d'augmenter sensiblement ce chiffre en prévoyant deux cercles concentriques de trous et deux moyens tels que les moyens 8 en correspondance.

La lecture d'une identité sous l'eau est simple, sûre et rapide: Après accouplement entre le cône 5 et l'ouverture 13 on met en marche le moteur à vitesse constante. Ainsi le transducteur se met successivement en face de tous les trous et mesure la profondeur correspondante. Après un tour complet, il connaît la profondeur de tous les trous par rapport à l'index. Le microprocesseur en décode alors le numéro d'identification.

L'invention n'est pas limitée à l'exemple décrit ci-dessus. Sans sortir du cadre des revendications ci-annexées, on peut aussi retourner la position du support dans l'extrémité supérieure de l'élément combustible et, en offrant la face lisse à l'extérieur, éviter que des corps étrangers puissent pénétrer dans un trou lors de l'irradiation de longue terme dans un réacteur et puissent alors fausser la lecture. Une autre variante est esquissée sur la figure 3a: Ici le chemin de balayage du transducteur 8 n'est plus un cercle mais une ligne droite, le support est alors une barrette et les axes des trous sont situés sur un plan orthogonal à la face portant les trous. Ici également, on peut inverser la barrette, comme il est représenté sur la figure 3b.

La tête peut aussi être utilisée sur des objets hors d'un milieu liquide. Pour assurer le couplage ultrasonore entre le transducteur 8 et le fond des trous, on prévoit un petit réservoir d'eau 15 dans la tête qui sous commande par le microprocesseur envoie une petite quantité d'eau dans l'interspace entre ce transducteur et la surface plane 6 après l'accouplement de la tête sur l'élément combustible. Mais bien entendu, l'invention peut aussi mettre en oeuvre d'autres ondes telles que des ondes optiques (laser) ou électromagnétiques (radar) pour détecter la profondeur des trous par mesure des réflexions dans un environnement sec.

Les trous ne doivent pas présenter nécessairement une section ronde mais peuvent également être constitués par des rainures longitudinales de profondeur différente. Un avantage particulier de la présente invention consiste dans le fait que ce système peut être combiné sans difficultés à un contrôle d'intégrité de l'objet selon le document W094/06006 car ce contrôle se fait simultanément par le balayage ultrasonore lors de la lecture d'identité, un sceau intact ayant une autre réponse ultrasonore qu'un sceau qui a été manipulé, par exemple dans le secteur de 45° sans trou du support 1.

Enfin l'invention n'est pas limitée à l'application visée ci-dessus, à savoir l'identification d'éléments combustibles, mais peut servir partout où il faut identifier un objet dont les marques servant à l'identification risquent d'être encrassées, abîmées ou même détruites.

## Revendications

1. Système d'identification d'un objet comportant un support de numéro d'identification lié à l'objet ou en faisant partie, et une tête de lecture de ce numéro, caractérisé en ce que le support (1) présente au moins une surface plane (6) dans laquelle sont percées plusieurs marques (12) alignés régulièrement le long d'au moins une ligne, chaque marque ayant une parmi plusieurs profondeurs discrètes en fonction du numéro d'identification de cet objet, et que la tête de lecture (3) comporte des moyens (13) pour se situer face à cette surface plane (6), des moyens (9) pour balayer cette surface (6) et des moyens (8) pour mesurer la profondeur de ces marques (12).

2. Système selon la revendication 1, caractérisé en ce que ladite au moins une ligne est un cercle (fig. 2).

3. Système selon la revendication 1, caractérisé en ce que ladite au moins une ligne est une ligne droite (fig. 3).

4. Système selon l'une des revendications précédentes, caractérisé en ce que les marques (12) sont des trous borgnes.

5. Système selon l'une des revendications précédentes, caractérisé en ce que les moyens pour mesurer la profondeur des marques comportent un transducteur ultrasonore (8) pour émettre des impulsions et pour recévoir des ondes ultrasonores réfléchies.

6. Système selon la revendication 5, caractérisé en ce que le support présente deux surfaces planes parallèles dont l'une (6) comporte les marques alors l'autre est la face de lecture pour les moyens (8) mesurant la profondeur des marques.

7. Système selon l'une des revendications 1 à 4, caractérisé en ce que les moyens pour mesurer la profondeur des marques comportent une source laser et un détecteur des réflexions laser.

8. Système selon l'une des revendications 1 à 4, caractérisé en ce que les moyens pour mesurer la profondeur des marques comportent une source d'ondes électro-magnétiques et un récepteur radar.
